Europäisches Patentamt

European Patent Office

Office européen des brevets

(11) Publication number: **0 376 449**
**A1**

## EUROPEAN PATENT APPLICATION

(21) Application number: 89311299.5

(22) Date of filing: 01.11.89

(51) Int. Cl.5: **G01D 5/26, G01J 9/02,**
**G01B 9/02, G01H 9/00,**
**G02B 6/28, H01S 3/08**

(30) Priority: 01.11.88 GB 8825481

(43) Date of publication of application:
04.07.90 Bulletin 90/27

(84) Designated Contracting States:
AT BE CH DE ES FR GB GR IT LI LU NL SE

(71) Applicant: **BRITISH TELECOMMUNICATIONS**
**public limited company**
**81 Newgate Street**
**London EC1A 7AJ(GB)**

(72) Inventor: **Millar, Colin Anderson**
**20 Dellwood Avenue**
**Felixstowe Suffolk IP11 9HP(GB)**

(74) Representative: **Greenwood, John David et al**
**British Telecom Intellectual Property Unit**
**151 Gower Street**
**London WC1E 6BA(GB)**

(54) **Interferometer.**

(57) An an all optical fibre interferometer is formed from an optical fibre Mach-Zehnder interferometer (25) whose output ports (18,20) are coupled by an optical fibre loop (20) which relaunches any optical signal output from either of the output ports (18,20) into a respective one of the output ports (20,18). A piezo-electric stretcher 26 is used to adjust the length of the arm (22) relative to the other arm (24) in response to a measurand. The interferometer outputs at port 1 an intereference signal dependant on the relative optical path length ofthe arms (22,24) allowing a measurand to be monitored via the same port 1 as the input optical signal $I^{in}$ is coupled. This allows remote sensing via a single optical fibre coupled to port 1. The interferometer also finds application as a reflection modulator as a variable reflectivity mirror and Q-switch for a fibre laser.

Fig. 1.

## INTERFEROMETER

This invention relates to interferometers.

One well known interferometer is the Mach-Zehnder interferometer in which an optical splitter splits an optical singal into two portions which propagate along distinct optical paths to an optical combiner. The relative phase difference between the two portions at the combiner can be monitored by allowing them to interfere and measuring the intensity of the resultant optical signal. The relative phase difference depends on the difference between the two optical path lengths. Such an interferometer can be used as a sensor or as a modulator by including means for altering the difference in optical path length between the two arms in response to a change in a measurand or modulating signal. An example is disclosed in a review article entitled "Optical Fibre Sensor Technology," IEE Transactions on Microwave Theory and Techniques Vol MTT-30 No.4 April 1982 pp473 - 480 by Giallorenzi et al.

A disadvantage of known Mach-Zehnder interferometers when used as sensors is that the interfering portions have to be monitored at an output port which is seperated from the input port. If it is necessary to monitor the condition of interferometer from a distance an optical waveguide, for example an optical fibre, needs to be coupled to the output to allow propagation of the optical portions back to the monitor. This can involve large amounts of fibre if the sensor is positioned remotely.

In this specification the term "optical" is intended to refer to that part of the electromagnetic spectrum which is generally known as the visible region together with those parts of the infra-red and ultraviolet regions at each end of the visible region which are capable for example of being transmitted by dielectric optical waveguides such as optical fibres.

According to the present invention an interferometer comprises an optical splitter having at least one input port and two optical splitter output ports; an optical combiner having two optical combiner input ports and two outputs ports; a first and a second optical arm each optically coupling a respective one of optical splitter output ports with one of the optical combiner input ports; and an adjustment means for changing the optical path length of one arm relative to the other; characterised in including relaunching means for relaunching any optical signal output from either of the combiner output ports into a respective one of the combiner output ports.

The signals exiting the combiner output ports which are produced as a result of an input signal being launched into an input port of the optical splitter (as in known Mach-Zehnder interferometers) will be relaunched into the optical combiner output ports and will thereby undergo a second transit through the Mach-Zehnder portion of the interferometer.

The optical splitter now acts as an optical combiner for the optical signals that have propagated back along the interferometer arms. These signals interfere. As will be explained in more detail later the resultant interference signal changes with the relative optical path length of the two arms but in this case the interference signal leaves the interferometer from the input port into which the original input optical signal was coupled can be monitored.

The reflected signal can therefore propagate back to the monitor station along the same optical waveguide which supplies the optical signal to the optical splitter. That part of the signal emerging from the input port into which the input signal was launched is by convention termed the reflected signal, and that emerging from the other input port if there is one (for example when the splitter is a four port fused fibre coupler) is termed the transmitted signal.

The Mach-Zehnder portion of the interferometer may be formed from bulk optic components comprising a first and a second beam splitter, and a first and a second mirror in known manner. Light entering the device is split into a first and a second portion by the first beam splitter. The portions each follow a separate optical path to the optical combiner, for example one defined by the first and second mirror respectively, the other being a straight optical path, where they recombine to produce first and second output interference signals at a first and second output port.

The relaunching means of the present invention used with such a bulk optic Mach-Zehnder interferometer may comprise two mirrors positioned such that the output signal from the first output port of the Mach-Zehnder interferometer is incident on a third mirror, and then on a fourth mirror and finally is relaunched into the Mach-Zehnder interferometer via the second input port. An output signal from the second input port will be incident on first the second mirror and then on the first mirror to be relaunched into the Mach-Zehnder interferometer via the first input port. Alternatively the third and fourth mirrors may be arranged to relaunch light from each output back into the same output.

A particularly convenient form of the interferometer is formed by a pair of 4-port optical couplers optically coupled by a pair of optical waveguides, for example optical fibres, whcih constitute the optical arms, the means for relaunching comprising a looped optical waveguide formed between the first and second output ports of the Mach-Zehnder interferometer. Such a device may be formed from a single length of fibre, is robust and does not suffer from any of the alignment problems which would be incurred if the device were made either entirely, or partially from bulk optics.

The present invention may also be formed from planar waveguides, for example formed in a LiNbO₃ substrate. In such an embodiment the optical splitter may have a single input.

The device is employable as a sensor by arranging for the adjustment means to be sensitive to the quantity to be measured, for example by mechanical stretching due to incident vibrations or by an electro-optical effect.

It will be appreciated that the invention is applicable to Mach-Zehnder interferometers in general and is not limited to specific types of splitters, combiners or relaunching means nor specific adjustment means for changing the optical path length of one arm relative to the other that may be mentioned by way of specific example.

The present invention can find applications other than as a sensor by using of the property that the reflected signal can be modulated by the adjustment means. For example, the interferometer can be used as a variable output reflector for, or to provide Q-switched operation of a fibre laser.

Embodiments of the invention will now be described by way of example only with reference to the following diagrams in which:

Figure 1 is a schematic representation of an optical fibre interferometer according to the present invention;

Figure 2 is a schematic representation of a bulk optical interferometer according to the present invention;

Figure 3 is a schematic representation of an experimental arrangement used to characterise the embodiment of Figure 1;

Figure 4 is a graph of transmitted and reflected output intensity of the embodiment of Figure 3; and

Figure 5 is a schematic representation of a fibre laser having an interferometer according to the present invention as one of the laser mirrors.

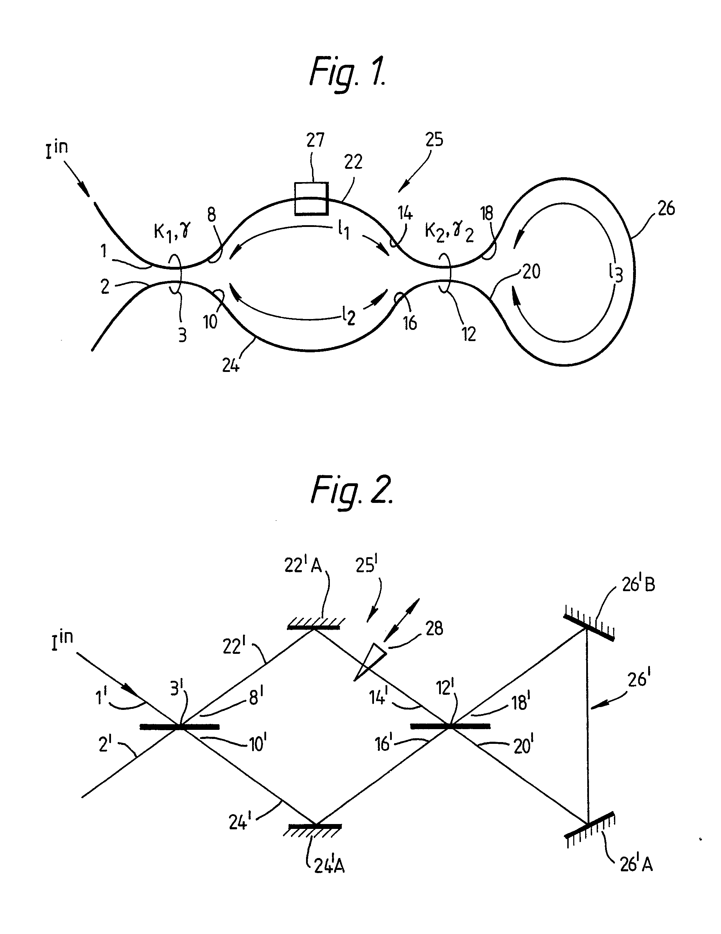

Referring to Figure 1 an optical fibre interferometer comprises an optical splitter 3 having input ports 1 and 2 and optical splitter output ports 8 and 10, an optical combiner 12 having optical combiner input ports 14 and 16 and output ports 18 and 20, the pairs of ports 8 and 14, and 10 and 16 being optically coupled by arms 22 and 24 respectively to form a Mach-Zehnder interferometer 25, and ports 18 and 20 coupled by the loop 26 constituting the relaunching means. The device was formed from a single, single-mode optical fibre, the splitter 3 and combiner 12 being fused tapered couplers made in known manner. Other couplers may be employed, for example polished optical couplers or optical waveguide couplers if the invention is implemented for example in a LiNbO₃ substrate.

A piezo-electric stretcher 27 can be actuated to change the optical path length of one arm 22 relative to the other 24. Other devices capable of so changing the relative optical path length of the arms 22 and 24 may be used instead.

Referring to Figure 2, the bulk optics equivalent to figure 1 is shown, equivalent features being indicated by the same numerals primed. An optical splitter and combiner 3′, 12′ are formed by half mirror beam splitters, the arms 22′ and 24′ being defined by full mirrors 22′A and 24′A and loop 26′ by full mirrors 26′A and 28′B. The optical path length is adjustable by means of the movable prism 28′.

A methodology for setting up equations to describe optical fibre interferometers of arbitrary complexity, which involve directional couplers, has been described in an article by P.Urquhart, Applied Optics Vol 26 (1987) 456. Using this approach, a set of linear equations can be set up which establishes the relationships between the components of the complex electric field propagating in both directions at the points of the device which are immediately adjacent to the couplers. There are as many equations as there are unknown quantities, which in the present case is sixteen. This formalism gives the same results as the method which relies on summation of field components which describe the various pathways through the structure but is more suitable for use with complicated structures. In analysing the interferometer of the present invention it is assumed that the state of polarisation remains constant throughout the device. In practice it was found that polarisation control was necessary. This can be achieved by any one of the following: (a) appropriate adjustment of the lie of the optical fibre, (b) using polarisation controllers, c) using polarising maintaining fibres and polarisation couplers.

It is assumed $K_i$ and $\gamma_i$ are the intensity coupling ratio and the coupling loss respectively, of the splitter 2 and combiner 12, where i = 1 or 2 for the fibre couplers constituting the splitter and combiner respectively. The lengths of the arms 22 and 24 and loop 20 are $l_1$, $l_2$ and $l_3$. The (field) loss and propagation constant are $\alpha$ and $\beta$, respectively. $\beta$ is given by

$$\beta = 2\pi n_e/\lambda \qquad (1)$$

where $n_e$ is the effective fibre refractive index and $\lambda$ is the free space wavelength.

When solved simultaneously the initial equations give solutions for the outputs at ports 1 and 2. The field solutions are multiplied by their own complex conjugates to give two corresponding output intensities. These can be described by a single equation in which the constants take on one of two forms, depending on which output port is being considered. The intensity response function may be expressed as

$$I_i^{out}/I_i^{in} = [(A_i + B_i + C_i)^2 - 4A_i(B_i + C_i)\sin^2(\delta/2) - 4B_iC_i\sin^2(\delta)]\exp(-2\alpha l_3), \qquad (2)$$

where $\delta$ is the phase difference between the two arms of lengths $l_1$ and $l_2$, and is given by

$$\delta = \beta(l_1 - l_2). \qquad (3)$$

The constants are given by $A_i$, $B_i$ and $C_i$ in which $i = 1, 2$ depending upon whether the output is from port 1 or 2.

$$A_1 = r_1 t_1 \exp(-\alpha(l_1 + l_2)) \qquad (4)$$
$$B_1 = r_2 (l-K_1) (l-\gamma_1) \exp(-2\alpha l_1) \qquad (5)$$
$$C_1 = -(r_2 K_1) (l-\gamma_1) \exp(-2\alpha l_2) \qquad (6)$$
$$A_2 = t_1 t_2 \exp(-\alpha(l_1 + l_2)), \qquad (7)$$
$$B_2 = -r_1 r_2 \exp(-2\alpha l_1)/2 \qquad (8)$$
$$C_2 = r_1 r_2 \exp(-2\alpha l_2)/2 \qquad (9)$$

The amplitude transmissivity and reflectivity terms that would apply to a loop reflector made from zero loss fibre with coupling ratio $K_i$ and coupling loss $\gamma_i$ have been identified in the analysis and are given by $r_i$ and $t_i$, respectively. These terms are given by the following equations:

$$r_i = 2K_i^{1/2}(1-K_i)^{1/2} (1-\gamma_i), \qquad (10)$$
$$t_i = (1-2K_i) (1-\gamma_i). \qquad (11)$$

When the optical path lengths of the arms $l_1$ and $l_2$ are equal, $\delta$ is zero and equation (2) becomes

$$I_i^{out}/I_i^{in} = (A_i + B_i + C_i)^2 \exp(-2\alpha l_3). \qquad (12)$$

Equation (12) is an invariant function with respect to $\delta$; that is light is merely split unequally between the two ports. The device is then showing loop reflector characteristics.

Consider now that both couplers have coupling ratios of 1/2. The output then takes on the following simple form.

$$I_i^{out}/I_i^{in} = [(B_i + C_i)^2 - 4B_iC_i\sin^2(\delta)]\exp(-2\alpha l_3) \qquad (13)$$

It is noteworthy that $t_i$ has a small value even when K is approximately, but not exactly, equal to 1/2. It can thus be seen from equations (4) and (7) that $A_1$ and $A_2$ are approximately zero. Consequently, we would expect that equation (13) would apply to a good approximation even when the couplers do not have a splitting ratio of exactly 50:50. Such insensitivity to an important component value is to be seen as a desirable feature of the present invention. A further feature of equation (13) is that we can easily see the effect of losses in arms 22, 24 and loop 20, which could arise from making the device from splicing two couplers together in three positions. The length-loss products $\alpha l_i$, which appear in equations (4) to (9) and (13) can be multiplied by an appropriate scaling factor. The discrete splice loss is thus replaced by an equivalent distributed loss in the arm of length $l_i$. As can be seen from the constants $B_i$ and $C_i$ in equation (13), the effect of splice losses is to bring about a small reduction in both the peak output intensity and the depth of modulation.

In the situation where the losses of the fibre and both couplers take on the low values of fractions of a dB, which are routinely achievable in practice the intensity equations can be written to a good approximation in the following form:

$$I_i^{out}/I_i^{in} = \sin^2(\delta), i = 1, = \cos^2(\delta), i = 2. \qquad (14)$$

Equation (14) shows that, as required by conservation of energy, the sum of the outputs from the two ports is unity. It can also be seen from equation (14) that when low loss components are used in conjunction with 50:50 couplers, the light output from the two ports is determined only by the relative phase change, $\delta$ associated with the transits in the two arms. $\delta$ depends upon the difference in the optical path length of the two arms 22 and 24, $(l_1 - l_2)$ and on the propagation constant, $\beta$. Thus in order to bring about a variation in $\delta$ and hence a change in the output intensity of the two arms either $\beta$ or $(l_1 - l_2)$ must be varied. There are several ways can be achieved in practice. The fibre may be stretched along its length or a temperature change made to one of the fibres. Alternatively, the wavelength of the light launched into the interferometer can be adjusted. The present invention is therefore useful as a sensor or reflection modulator.

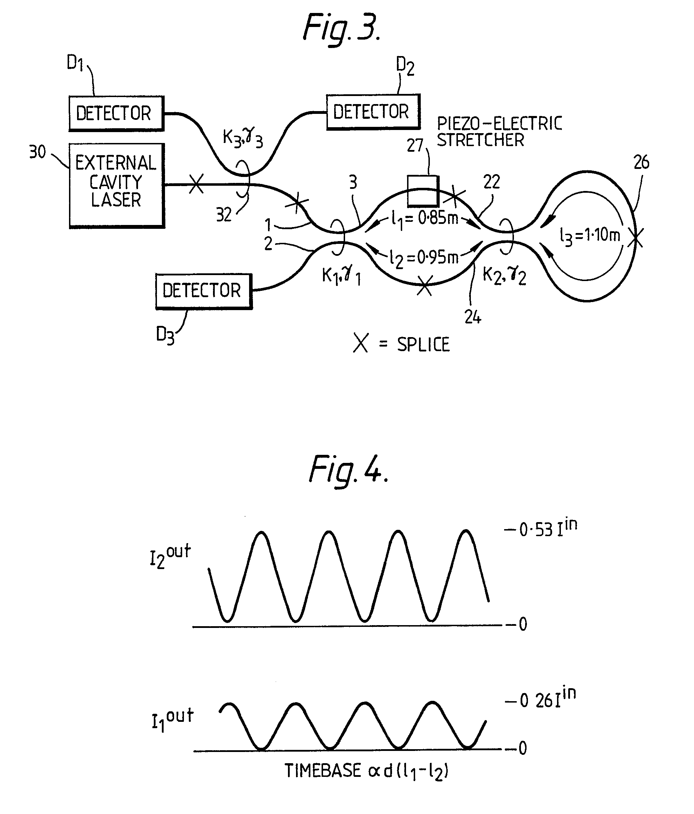

The experimental arrangement used to examine the performance of the embodiment of the present invention shown in Figure 1 is illustrated in Figure 3, in which the entire device is made from standard single mode telecommunications-type optical fibre with fused-tapered couplers. Those elements in common with the Figure 1 embodiment are referenced by the same numerals. The technique adopted to scan the relative phase difference, $\delta$, was to launch light of a constant wavelength into port 1 and to vary periodically the length of the fibre in arm 22 with the piezo-electric stretcher 27. Thus stretching the device applied a constant phase shift linearly related to an applied voltage ramp, which was in turn synchronised to the timebase of an oscilloscope (not shown). Time therefore becomes directly proportional to the phase difference, $\delta$.

An InGaAsP external cavity semiconductor diode laser 30 which had a measured operating wavelength of 1.53374μm was used to provide the input signal. An optical isolator (not shown) prevented laser instabilities due to reflected signals, A third directional coupler 32 was spliced to the input port 1. The launched, transmitted and reflected signals were monitored by positioning detectors D1-D3 at three locations connected to a high resolution oscilloscope (not shown). Values of the lengths $l_1$, $l_2$ and $l_3$ of the arms 22 and 24 and the loop 26 was 0.85m, 0.95m and 1.10m respectively. The fused couplers were designed to be 50:50 at 1550 nm. Their measured coupling ratios at the operating wavelength were $K_1 \approx K_2 = 0.52 \pm 0.01$. Both couplers had excess losses of about 0.05 to 0.1 dB. The coupler 32 had a splitting ratio of 0.55.

The experimentally measured transmitted and reflected output intensities from ports 2 and 1, respectively, are plotted as a function of relative phase change, $\delta$, in figure 4. As can be seen, the traces correspond closely to the $\sin^2$ and $\cos^2$ responses required by equation (14). Four cycles of the curves are shown. Even when observation was made over a larger number of periods there was no evidence of the higher frequency, $\sin^2(\delta/2)$ component indicated in equation (2). This is to be expected because $A_i$, as given by equations (4) and (7), is small when $K_i \approx 1/2$. The peak values of the measured transmitted and reflected intensities were 0.53 $I^{in}$ and 0.26 $I^{in}$, respectively, where $I^{in}$ is the launched intensity from the laser. The reflected peak intensities are lower in magnitude as they had to pass through the input coupler twice before detection. The measured values compared well with the expected values of 0.55 $I^{in}$ and 0.248 $I^{in}$ for the transmitted and reflected signals, respectively. As can be seen from figure 4 there was a low level of unmodulated signal. The unmodulated throughput was measured to be no more than 0.026 $I^{in}$, indicating that despite the fact that couplers 3 and 12 were not exactly 50:50, a good depth of modulation could be achieved. As discussed above this is consistent with the expectation that the response should be reasonably insensitive to non-optical coupling ratios and the presence of small excess losses.

From the calculated variation of output power with respect to phase it has shown that a variety of output responses is possible. Two responses are of particular interest. When the two constituent arms are of equal optical length the device acts as frequency independent reflector. When both of the direction couplers have a coupling ratio of 50% the dependence of output power from the two ports on the relative phase difference, $\delta$, of the signals in the two arms are given simply by $\sin^2(\delta)$ and $\cos^2(\delta)$. A relative phase variation can be brought about by a variety of means which means are well known in the art of Mach-Zehnder sensor technology, and modulation is thus possible over the full range of power levels. The experiment confirmed that by elongating one of the arms by a few microns the $\sin^2(\delta)$ and $\cos^2(\delta)$ response predicted by the calculations. An important strength of the present invention is that nearly full modulation is obtained even when non-optimal 50% couplers are used.

Because the reflection modulation depends on a relative phase difference between the two arms of the interferometer, the frequency of oscillation can be as great as the modulation of the phase in one arm. This is a significant advantage over a single optical fibre loop Sagnac reflector in which reflection modulation takes place by differential phase delays in the same (loop) path or in which the coupling ratio of the splitter is modulated to vary the reflected signal.

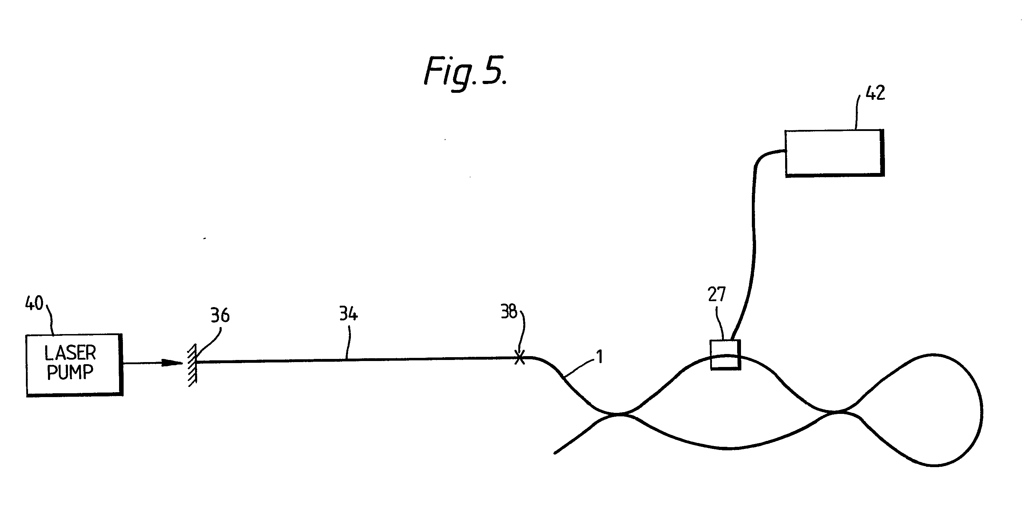

Referring now to figure 5, an optical fibre laser comprises known erbium doped silica optical fibre 34 which forms the active lasing material of a lasing cavity defined by a wavelength selective dichroic mirror 36 at one end of the fibre and a interferometer according to the present invention spliced to the other by fusion splice 38. It is pumped by the laser pump 40 in a known manner. A controller 42 is used to control the piezo-electro stretcher 27 which can thereby be set to vary the reflectivity of the interferometer (as regards an optical signal entering at port 1 from the fibre 34). The present invention is of course applicable to other laser arrangements including bulk optical lasers. It is known that the optimum output power of a laser depends on the reflectivity of its cavity mirrors. The present invention can be used as a variable reflectivity mirror to optimise the efficiency of the laser. The speed of change of the reflectivity also allows it to be used as a reflective modulator for Q-switching a laser.

The reflected and transmitted portions of the input optical signal vary periodically with frequency. The present application can therefore be used as a frequency filter, for example to select portions from a comb of frequencies.

**Claims**

1. An interferometer comprising -
an optical splitter having at least one input port and two optical splitter output ports;
an optical combiner having two optical combiner input ports and two output ports;
a first and a second optical arm each optically coupling a respective one of optical splitter output ports with one of the optical combiner input ports; and
an adjustment means for changing the optical path length of one arm relative to the other;
characterised in including relaunching means for relaunching any optical signal output from either of the output ports into a respective one of the output ports.

2. An interferometer as claimed in claim 1 in which the optical splitter and optical combiner are optical waveguide couplers and the arms are optical waveguides.

3. An interferometer as claimed in claim 2 in which the relaunching means comprises an optical waveguide optically coupling the two optical combiner outputs.

4. An interferometer as claimed in claim 2 in which all the optical waveguides comprise optical fibres.

5. An interferometer as claimed in claim 4 in which all the waveguides are formed from a single optical fibre.

6. A laser having at least one end of lasing cavity defined by an intrrferometer as claimed in any preceding claim.

7. A laser as claimed in claim 6 in which the lasing cavity comprises an optical fibre lasing medium and the interferometer is an all fibre optical interferometer.

## Fig. 1.

## Fig. 2.

Neu eingereicht / ...
Nouvellement ...

*Fig. 3.*

*Fig. 4.*

TIMEBASE $\propto d(l_1 - l_2)$

*Fig.5.*

LASER PUMP

40 36 34 38 1 27 42

EP 0 376 449 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 014 719 (LICENTIA)<br>* Figures 1,2; page 4, lines 15-25 *<br>--- | 1,4 | G 01 D 5/26<br>G 01 J 9/02<br>G 01 B 9/02<br>G 01 H 9/00<br>G 02 B 6/28<br>G 01 S 3/08 |
| A | US-A-4 725 141 (G.A. GEORGIOU)<br>* Figures 4,5; claim *<br>--- | 1,2,4 | |
| A,D | IEEE TRANSACTIONS ON MICROWAVE THEORY AND TECHNIQUES, vol. MTT-30, no. 4, April 1982, pages 472-511, New York, US; T.G. GIALLORENZI et al.: "Optical fiber sensor technology"<br>* Figure 24 *<br>--- | 1-5 | |
| A | OPTICS AND SPECTROSCOPY, vol. 58, no. 5, May 1985, pages 675-677, The Optical Society of America, Washington, US; L.V. IOGANSEN et al.: "Multimode fiber interferometers"<br>* The whole article *<br>--- | 1-6 | |
| A | US-A-4 753 529 (M.R. LAYTON)<br>* Figures 1,17; column 10, lines 57-68; column 11, lines 1-22 *<br>--- | 1,2,4 | TECHNICAL FIELDS SEARCHED (Int. Cl.5)<br><br>G 01 D 5/26<br>G 01 B 9/02<br>G 01 J 9/02<br>G 01 H 9/00<br>G 02 B 6/00<br>H 01 S 3/00 |
| A | APPLIED PHYSICS LETTERS, vol. 41, no. 3, August 1982, pages 231-233, American Institute of Physics, New York, US; J.E. BOWERS: "Fiber-optical sensor for surface acoustic waves"<br>* Figure 1; page 231, column 1, lines 1-41; column 2, lines 1-8 *<br>--- -/- | 1,2,4 | |

The present search report has been drawn up for all claims

| Place of search | Date of completion of the search | Examiner |
|---|---|---|
| THE HAGUE | 06-02-1990 | MATHYSSEK K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P0401)

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | APPLIED OPTICS, vol. 27, no. 15, 1st August 1988, pages 3107-3113, Optical Society of America, New York, US; T.A. BIRKS et al.: "Jones calculus analysis of single-mode fiber Sagnac reflector" * Pages 1,2 * | 1,3 | |
| A | EP-A-0 247 882 (BRITISH TELECOM.) * Whole document * | 1,3-7 | |
| A | US-A-3 589 794 (E.A.J. MARCATILI) * Figures 4,21; column 3, lines 23-49; column 8, lines 42-70 * | 1,2,3 | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 06-02-1990 | MATHYSSEK K. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)